# EUROPÄISCHE PATENTANMELDUNG

(11) **EP 3 599 392 A1**
(43) Veröffentlichungstag der Anmeldung: **29.01.2020**
(21) Anmeldenummer: 19187025.2
(22) Anmeldetag: 18.07.2019
(51) Int. Cl.: F16H 3/56, F16H 37/04, F16H 61/00

(54) **UMLAUFRÄDERGETRIEBE UND ARBEITSFAHRZEUG MIT EINEM UMLAUFRÄDERGETRIEBE**

(30) Priorität: 25.07.2018 DE 102018212425
(71) Anmelder: Deere & Company, Moline, IL 61265 (US)
(72) Erfinder: Buhrke, Frank, 68163 Mannheim (DE)
(74) Vertreter: Lavall, Christian Henner

(57) **Zusammenfassung**

Die Erfindung betrifft ein Umlaufrädergetriebe (24), das ein Gehäuse (44), eine Eingangswelle (28), und ein damit fest verbundenes erstes Sonnenrad (32), eine Ausgangswelle (30), und ein damit fest verbundenes zweites Sonnenrad (34), einen Planetenträger (46), der beweglich zum ersten und zweiten Sonnenrad (32, 34) angeordnet ist, und darauf beweglich angeordnete erste und zweite Planetenrädern (40, 42) aufweist, wobei zwischen dem Planetenträger (46) und dem ersten Sonnenrad (32) eine erste Koppelungsvorrichtung (36), und zwischen dem Gehäuse (44) und dem Planetenträger (46) eine zweite Koppelungsvorrichtung (38) vorgesehen ist, die eine Relativbewegung zwischen dem Planetenträger (46) und dem ersten Sonnenrad (32), oder zwischen dem Planetenträger (46) und dem Gehäuse (44) oder beides blockieren.

## Beschreibung

Die vorliegende Erfindung betrifft ein Umlaufrädergetriebe mit einem Gehäuse, das in einem Arbeitsfahrzeug, vorzugsweise in einem landwirtschaftlichen Fahrzeug verwendet wird.

Bei Arbeitsfahrzeugen, insbesondere landwirtschaftlichen Nutzfahrzeugen wie Traktoren, werden in der Regel Getriebeanordnungen mit einer Vielzahl von Gängen eingesetzt, sofern nicht stufenlose Getriebe zum Einsatz kommen. Im Stand der Technik sind Getriebeanordnungen bekannt, die mehrere hintereinander angeordnete Getriebeeinheiten aufweisen. Derartige Getriebeanordnungen dienen dazu, den hohen Anforderungen in Bezug auf eine möglichst feinstufige Abstufung aber auch weite Spreizung der Getriebeübersetzungen gerecht zu werden. So kann beispielsweise eine typische Konfiguration einer Getriebeanordnung aus einem mehrstufigen Hauptgetriebe und einer nachgeschalteten Bereichsgruppe bestehen. In landwirtschaftlichen Nutzfahrzeugen werden zudem sogenannte Reversiereinheiten und bei Bedarf Kriechganguntersetzungen vorgesehen.

Das Hauptgetriebe wird regelmäßig lastschaltfähig ausgelegt, wobei es prinzipiell als Planetenradgetriebe oder als Parallelschaltgetriebe aufgebaut sein kann. Grundsätzlich herrscht bei der Auslegung von Getriebe- und Antriebskomponenten ein Zielkonflikt zwischen gewünschter Funktionalität und zur Verfügung stehendem Bauraum. So liegt beispielsweise in Traktoren der 130-PS-Klasse die Anzahl der lastschaltbaren Gänge üblicherweise bei 3 bis 5. Unter Funktionalitätsgesichtspunkten wären allerdings sowohl für Feldarbeiten als auch für Transportarbeiten 6 oder 8 lastschaltbare Gänge wünschenswert. Selbst wenn dies in einem preislich vertretbaren Rahmen darstellbar ist, bleibt immer noch das Problem zu lösen, diese zusätzlichen lastschalbaren Gänge in den bestehendem Bauraum zu integrieren.

Ausgehend hiervon besteht die Aufgabe der vorliegenden Erfindung darin, eine im Hinblick auf Lastschaltbarkeit weiter verbesserte Funktionalität in einem Antriebsstrang bereitzustellen.

Die Aufgabe wird gelöst durch die Erfindung gemäß dem Hauptanspruch und dem nebengestellten Anspruch.

Hierbei weist ein erfindungsgemäßes Umlaufrädergetriebe ein Gehäuse, eine Eingangswelle, und ein damit fest verbundenes erstes Sonnenrad, eine Ausgangswelle, und ein damit fest verbundenes zweites Sonnenrad, einen Planetenträger, der beweglich zum ersten und zweiten Sonnenrad angeordnet ist, und darauf beweglich angeordneten ersten und zweiten Planetenrädern auf, die miteinander fest verbunden sind, und jeweils mit den ersten und zweiten Sonnenrädern im Eingriff sind, wobei zwischen dem Planetenträger und dem ersten Sonnenrad eine erste Koppelungsvorrichtung, und zwischen dem Gehäuse und dem Planetenträger eine zweite Koppelungsvorrichtung vorgesehen ist, die eine Relativbewegung zwischen dem Planetenträger und dem ersten Sonnenrad, oder zwischen dem Planetenträger und dem Gehäuse oder beides blockieren.

Hierdurch kann das Umlaufrädergetriebe kompakt gestaltet werden. Durch die Koppelungsvorrichtungen ist das Umlaufrädergetriebe zwischen zwei unterschiedlichen Übersetzungen schaltbar. Zusätzlich ergibt sich die Möglichkeit, durch ein gleichzeitiges Schalten beider Koppelungsvorrichtungen, den gesamten Leistungsstrang des Umlaufrädergetriebes zu blockieren. Hierdurch kann eine Parksperre realisiert werden. Mittels der Schaltbarkeit des Planetengetriebes durch die beiden Koppelungsvorrichtungen kann etwa ein höher übersetzter Gang und ein Kriechgang umgesetzt werden. Durch die Einbettung des Umlaufrädergetriebes in einen Antriebsstrang, etwa in der Position eines Nachschaltgetriebes, ist es möglich, eine High-Low-Schaltung platzsparend umzusetzen.

In einer weiteren Ausbildung können die Koppelungsvorrichtungen unter Last schaltbar sein. Das gesamte Getriebe erhält somit wenigstens zwei weitere Gänge, die eine höhere Spreizung des Getriebes erlauben, welche zusätzlich unter Last schaltbar sind. Hierbei wird der Anwendungskomfort erhöht. So kann durch die Verwendung als High-Low-Schaltung der gesamte Antriebsstrang mit einer verkürzten Baulänge ausgeführt werden, wobei Material und Gewicht eingespart werden können.

Bei einer Ausführung können die Koppelungsvorrichtungen Lamellenkupplungen sein. Durch die Ausbildung als Lamellenkupplung können diese mittels Hydraulik angesteuert werden. Bauteile der Hydraulik sind üblich, so dass auf bewährte Technik zugegriffen werden kann, die eine präzise Auslegung erlaubt.

In einer Ausbildung kann dem Umlaufrädergetriebe jegliches Hohlrad fehlen. Durch das Entfallen eines Hohlrades bei der Konstruktion des Umlaufrädergetriebes ist dieses unabhängig von den unterschiedlichen Drehzahlen an der Eingangs- und Ausgangswelle betreibbar. Weiterhin kann durch Einsparung der Verzahnung zwischen den Planetenrädern und dem Hohlrad die Effizienz des Umlaufrädergetriebes gesteigert werden, da Abrollverluste verringert werden.

Bei einer weiteren Ausführung können das erste und zweite Sonnenrad eine unterschiedliche Größe und/oder unterschiedliches Modul, und/oder eine unterschiedliche Teilung aufweisen. Hierdurch kann das Umlaufrädergetriebe an die beabsichtigten Übersetzungen angepasst werden. Des Weiteren kann für ein nachgeschaltetes Gruppenschaltgetriebe eine optimale Einstellung von Drehmoment und Drehzahl eingestellt werden.

In einer weiteren Ausbildung können die ersten und zweiten Planetenräder eine unterschiedliche Größe und/oder unterschiedliches Modul, und/oder eine unterschiedliche Teilung aufweisen. Hierdurch kann das Umlaufrädergetriebe an die beabsichtigten Übersetzungen angepasst werden. Des Weiteren kann für ein nachgeschaltetes Gruppenschaltgetriebe eine optimale Einstellung von Drehmoment und Drehzahl eingestellt werden.

Bei einer Weiterbildung kann im Umlaufrädergetriebe durch Schließen der ersten Koppelungsvorrichtung eine Drehzahl der Ausgangswelle einer Drehzahl der Eingangswelle entsprechen. Die Drehzahl, die an die Eingangswelle vom Hauptschaltgetriebe anliegt, wird direkt an ein Gruppenschaltgetriebe durchgeleitet. Dies ermöglicht beispielsweise einen niedrigen Gang des Arbeitsfahrzeugs, sogenannter Low-Mode. Hierbei kann bei niedriger Fahrzeuggeschwindigkeit ein hohes Drehmoment aufgebracht werden. Mittels der Schaltbarkeit kann durch das Fixieren des ersten Sonnenrades mit dem Planetenträger ohne weitere Übersetzung das Drehmoment an den nachgeschalteten Antriebsstrang geleitet werden.

Umlaufrädergetriebe nach einem der vorherigen Ansprüche, wobei durch Schließen der zweiten Koppelungsvorrichtung eine Übersetzung zwischen der Eingangswelle und der Ausgangswelle stattfindet. Dies ermöglicht ein festes Übersetzungsverhältnis zwischen der Eingangs- und der Ausgangswelle. Die Planetenräder befinden sich um gegenläufigen Umlauf um die Sonnenräder. Üblicherweise können hier Übersetzungen von 2,16 verwendet werden, wobei die Drehzahl der Ausgangswelle gegenüber der Eingangswelle um den Faktor erhöht ist. Aufgrund der Schaltbarkeit kann zwischen dem Antriebsmotor und einem nachgeschalteten Gruppenschaltgetriebe eine weitere Erhöhung der Drehzahl und Modellierung des Drehmoments stattfinden, wobei eine Vergrößerung sowohl des Hauptschaltgetriebes oder des Gruppenschaltgetriebes vermieden wird. Gleichzeitig erlaubt die Schaltbarkeit des Umlaufrädergetriebes unter Last eine Verwendung des Fahrzeugs ohne Zugunterbrechung. Dies erhöht, besonders an Hanglagen oder bei Transportaufgaben, auch die Fahrzeugsicherheit, wobei ein Stoppen und Anfahren bei Schaltvorgängen entfällt.

Arbeitsfahrzeug mit einem Umlaufrädergetriebe nach einem der Ansprüche 1 bis 8. Das Arbeitsfahrzeug kann vielfältig eingesetzt werden, wobei die obigen Vorteile des Umlaufrädergetriebes eine Einsparung des Bauraums ermöglichen. Hierbei kann eine Neukonstruktion des gesamten Antriebsstranges vermieden werden, indem das Umlaufrädergetriebe etwa zwischen einem Hauptschaltgetriebe und einer Gruppenschaltung integriert wird. Weitere Änderungskonstruktionen an den Getriebebaugruppen, wie etwa zusätzliche Verzahnungen und Nebenwellen sind nicht notwendig.

Weitere Ausbildungen der Erfindung sind auch in den Figuren beschrieben.
Figur 1 zeigt eine Gesamtansicht mit einem beispielhaften Arbeitsfahrzeug;
Figur 2 zeigt eine Ausführung der Erfindung in einem Antriebsstrang;
Figur 3 zeigt eine detaillierte Ansicht einer Erfindungsausführung.

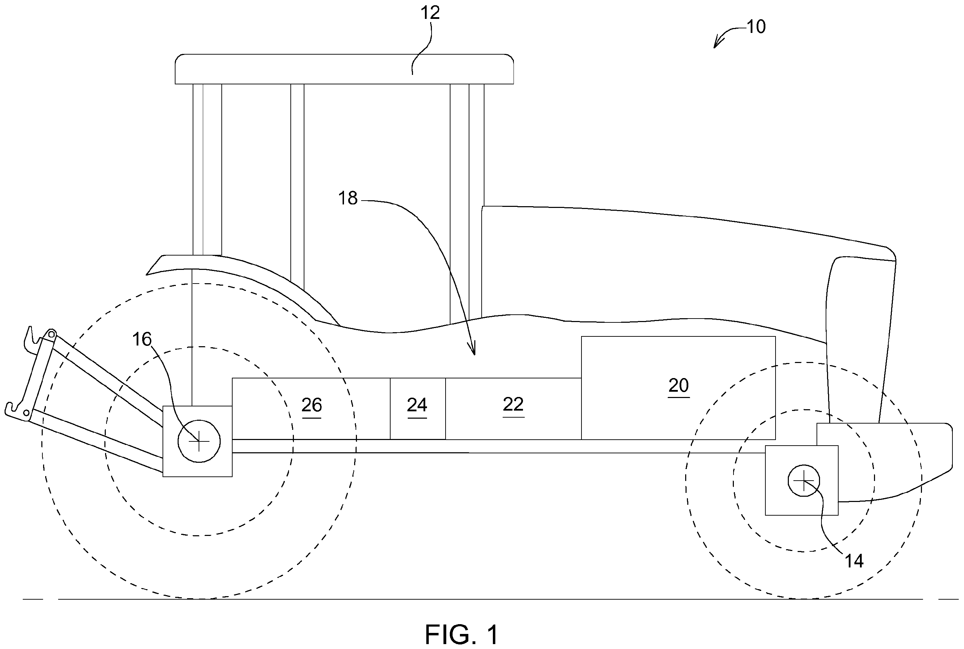

In Fig. 1 ist ein Arbeitsfahrzeug 10 mit einer Kabine 12 und einem Antriebsstrang 18 abgebildet. Das Arbeitsfahrzeug kann ein Traktor, aber auch eine Baumaschine sein. Das Arbeitsfahrzeug 10 weist eine vordere Fahrzeugachse 14 und einer hintere Fahrzeugachse 16 auf. Die Fahrzeugachsen 14, 16 sind ein Teil des Antriebsstrangs 18, wobei das Arbeitsfahrzeug mit einer zuschaltbaren Vorderachse 14 ausgestattet sein kann. Der Antriebsstrang 20 umfasst ferner einen Antriebsmotor 20, der als Verbrennungskraftmaschine oder als elektrische Maschine ausgeführt sein kann. Das Arbeitsfahrzeug 10 weist im Antriebsstrang 18 eine Getriebestruktur auf, die sich aus verschiedenen einzelnen Getriebekomponenten zusammensetzt.

In der vorliegend beschriebenen Getriebestruktur ist ausgehend von dem Antriebsmotor 20 ein Hauptschaltgetriebe 22, ein Nachschaltgetriebe 24, ein Gruppenschaltgetriebe 26 vorhanden. Abschließend kann, je nach Ausstattung des Arbeitsfahrzeugs 10 ein Differentialgetriebe vorgesehen sein. Das Hauptschaltgetriebe 22 kann eine Reversiereinheit aufweisen, die für die Rückwärtsfahrt verwendet wird.

Das Nachschaltgetriebe 24 ist erfindungsgemäß als Umlaufrädergetriebe 24 ausgeführt und im Antriebsstrang zwischen dem Hauptschaltgetriebe 22 und einem, je nach Ausführung des Arbeitsfahrzeugs 10, vorhandenem Gruppenschaltgetriebe 26 integriert. Das Gruppenschaltgetriebe 26 weist mehrere Wellen mit zuschaltbaren Zahnrädern auf, die unterschiedliche Übersetzungen ermöglichen.

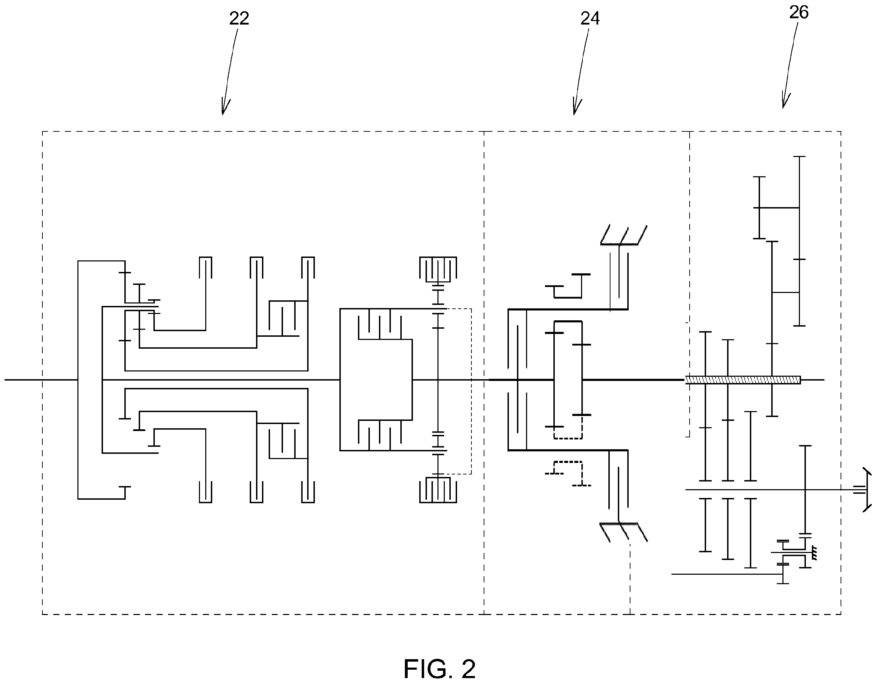

In Figur 2 ist ein exemplarischer Aufbau der verwendeten Getriebestruktur im Antriebsstrang 20 gezeigt. Hierbei wird, vom Antriebsmotor 20 ausgehend, Leistung in das Hauptschaltgetriebe 22 eingeleitet. Beispielhaft ist in Fig. 2 das Hauptschaltgetriebe 22 mit einem Hohlrad und mehreren Sonnenrädern abgebildet. Jedoch kann auch jede weitere geeignete Konstruktion für das Hauptschaltgetriebe verwendet werden.

Durch die Eingangswelle 28 wird die Leistung vom Hauptschaltgetriebe 22 an das Umlaufrädergetriebe 24 geleitet und abschließend über die Ausgangswelle 30 an das Gruppenschaltgetriebe 26.

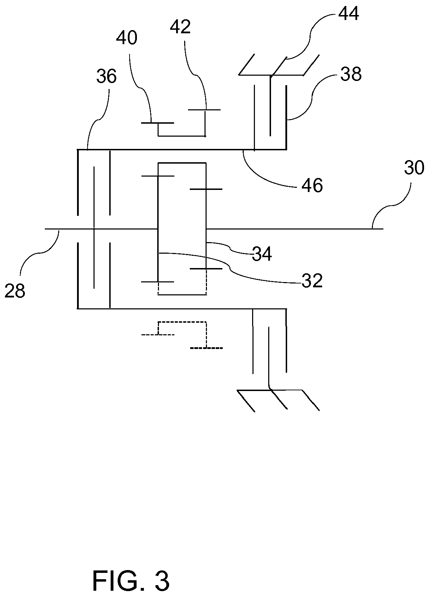

Figur 3 zeigt ein erfindungsgemäßes Umlaufrädergetriebe 24. Die Leistungseinleitung erfolgt über die Eingangswelle 28, welche ein erstes Sonnenrad 32 aufweist. Das erste Sonnenrad 32 kämmt mit einem ersten Planetenrad 40, das auf einem Planetenträger 46 um das erste Sonnenrad 32 umlaufen kann. Es können mehrere erste Planetenräder 40 am Umfang vorgesehen sein. Das erste Planetenrad 40 ist fest mit einem zweiten Planetenrad 42 verbunden, so dass beide Planetenräder 40, 42 stets die gleiche Drehzahl aufweisen. Das zweite Planetenrad 42 kämmt mit einem zweiten Sonnenrad 34, welches auf einer Ausgangswelle 30 des Umlaufrädergetriebes 24 vorgesehen ist.

Das Umlaufrädergetriebe 24 ist in einem Gehäuse 44 gelagert. Zwischen der Eingangswelle und dem Planetenträger 46 ist eine erste Koppelungsvorrichtung 36 ausgebildet, die eine drehfeste Verbindung ermöglicht, so dass bei geschlossener erster Koppelungsvorrichtung 36 der Planetenträger 46 und die Eingangswelle 28 mit der gleichen Drehzahl betrieben werden. Eine zweite Koppelungsvorrichtung 38 ist zwischen dem Planetenträger 46 und dem Gehäuse 44 ausgebildet. Diese ermöglicht das drehfeste Verbinden zwischen dem Planetenträger 46 und dem Gehäuse 44, so dass bei geschlossener zweiter Koppelungsvorrichtung 38 ein Umlaufen des Planetenträgers 46 relativ zum Gehäuse 44 verhindert ist.

Das Umlaufrädergetriebe 24 ermöglicht in der gezeigten Ausführung drei Schaltzustände, die eine kompakte Gestaltung des gesamten Antriebsstrangs 18 erlauben. In einem ersten Schaltzustand sind beide Koppelungsvorrichtungen 36, 38 geschlossen. Hierbei ist jedwede relative Drehung, sowohl des Planetenträgers 46, als auch der Sonnenräder 32, 34 blockiert. Besonders im Parkzustand des Arbeitsfahrzeugs 10 kann damit eine Parkbremse realisiert werden, welche das Fahrzeug gegen Wegrollen sichert, indem jegliches von den Rädern eingeleitete Drehmoment am Gehäuse 44 des Umlaufrädergetriebes abgestützt wird.

Im zweiten Schaltzustand ist die erste Koppelungsvorrichtung 36 geschlossen, während die zweite Koppelungsvorrichtung 38 geöffnet ist. Der Planetenträger 46 rotiert zusammen mit dem ersten Sonnenrad 32. Folglich ist eine relative Drehung der ersten und zweiten Planetenräder 40, 42 unterbunden, so dass das zweite Sonnenrad 34 gleichfalls zusammen mit dem ersten Sonnenrad 32 bei derselben Drehzahl rotiert. Somit wird Antriebsleistung ohne Veränderung durch das Umlaufrädergetriebe 24 durchgeleitet. Hiermit kann, besonders für Anwendungsfälle, die eine niedrigere Drehzahl erfordern, die Leistung direkt an das nachgeschaltete Gruppenschaltgetriebe abgegeben werden.

Im dritten Schaltzustand ist die erste Koppelungsvorrichtung 36 geöffnet und die zweite Koppelungsvorrichtung 38 geschlossen. Der Planetenträger 46 ist am Gehäuse drehfest gehalten, wodurch die Planeten gegenläufig zum ersten Sonnenrad 32 rotieren und wiederrum das zweite Sonnenrad 34 antreiben. In einer Ausführung kann dies zu einer Erhöhung der Drehzahl der Ausgangswelle 30 führen, beispielsweise hat sich ein Faktor von 2 bis 3 als vorteilhaft erwiesen. Hierdurch kann dem nachfolgenden Gruppenschaltgetriebe eine zusätzlich erhöhte Drehzahl zur Verfügung gestellt werden, die üblicherweise nur durch eine erweiterte Konstruktion des Hauptschaltgetriebes ermöglicht wird.

Das erfindungsgemäße Umlaufrädergetriebe 24 ermöglicht durch die zusätzliche Lastschaltbarkeit wenigstens drei Schaltzustände, die üblicherweise konstruktiv entweder im Haupt- oder im Gruppenschaltgetriebe vorgesehen werden muss. Die gesamte Konstruktion des Antriebsstrangs 18 kann vereinfacht werden, wobei die einzelnen Getriebesegmente mit geringerer Komplexität aufgebaut werden können.

## Patentansprüche

1. Umlaufrädergetriebe (24), aufweisend:
ein Gehäuse (44),
eine Eingangswelle (28), und ein damit fest verbundenes erstes Sonnenrad (32),
eine Ausgangswelle (30), und ein damit fest verbundenes zweites Sonnenrad (34),
einen Planetenträger (46), der beweglich zum ersten und zweiten Sonnenrad (32, 34) angeordnet ist, und darauf beweglich angeordnete erste und zweite Planetenräder (40, 42),
die miteinander fest verbunden sind und jeweils mit den ersten und zweiten Sonnenrädern (32, 34) im Eingriff sind,
wobei zwischen dem Planetenträger (46) und dem ersten Sonnenrad (32) eine erste Koppelungsvorrichtung (36), und zwischen dem Gehäuse (44) und dem Planetenträger (46) eine zweite Koppelungsvorrichtung (38) vorgesehen ist, die eine Relativbewegung zwischen dem Planetenträger (46) und dem ersten Sonnenrad (32),
oder zwischen dem Planetenträger (46) und dem Gehäuse (44) oder beides blockieren.

2. Umlaufrädergetriebe nach Anspruch 1, wobei die Koppelungsvorrichtungen unter Last schaltbar sind.

3. Umlaufrädergetriebe nach Anspruch 1 oder 2, wobei die Koppelungsvorrichtungen Lamellenkupplungen sind.

4. Umlaufrädergetriebe nach einem der vorherigen Ansprüche, wobei dem Umlaufrädergetriebe jegliches Hohlrad fehlt.

5. Umlaufrädergetriebe nach einem der vorherigen Ansprüche, wobei das erste und zweite Sonnenrad eine unterschiedliche Größe und/oder unterschiedliches Modul, und/oder eine unterschiedliche Teilung aufweisen.

6. Umlaufrädergetriebe nach einem der vorherigen Ansprüche, wobei die ersten und zweiten Planetenräder eine unterschiedliche Größe und/oder unterschiedliches Modul, und/oder eine unterschiedliche Teilung aufweisen.

7. Umlaufrädergetriebe nach einem der vorherigen Ansprüche, wobei durch Schließen der ersten Koppelungsvorrichtung eine Drehzahl der Ausgangswelle einer Drehzahl der Eingangswelle entspricht.

8. Umlaufrädergetriebe nach einem der vorherigen Ansprüche, wobei durch Schließen der zweiten Koppelungsvorrichtung eine Übersetzung zwischen der Eingangswelle und der Ausgangswelle stattfindet.

9. Arbeitsfahrzeug mit einem Umlaufrädergetriebe nach einem der Ansprüche 1 bis 8.
